Europäisches Patentamt

European Patent Office

Office européen des brevets

(11) Veröffentlichungsnummer : **0 079 033**
**B1**

(12) # EUROPÄISCHE PATENTSCHRIFT

(45) Veröffentlichungstag der Patentschrift :
20.02.85

(21) Anmeldenummer : 82110105.2

(22) Anmeldetag : 03.11.82

(51) Int. Cl.⁴ : **F 01 N   5/02, F 01 N   3/02**

(54) Diesel-Brennkraftmaschine mit Russabbrenn-Vorrichtung.

(30) Priorität : 07.11.81 DE 3144349

(43) Veröffentlichungstag der Anmeldung :
18.05.83 Patentblatt 83/20

(45) Bekanntmachung des Hinweises auf die Patenterteilung : 20.02.85 Patentblatt 85/08

(84) Benannte Vertragsstaaten :
DE FR GB IT SE

(56) Entgegenhaltungen :
DE-A- 2 519 609
DE-A- 2 655 932
US-A- 3 306 035
US-A- 4 065 919

(73) Patentinhaber : BAYERISCHE MOTOREN WERKE
Aktiengesellschaft
Postfach 40 02 40 Petuelring 130
D-8000 München 40 (DE)

(72) Erfinder : Melzer, Hans-Harald, Dr. Ing.
Galgenbachweg 15
D-8056 Neufahrn (DE)

(74) Vertreter : Schweiger, Erwin
Bayerische Motoren Werke Aktiengesellschaft Postfach 40 02 40 Petuelring 130 - AJ-30
D-8000 München 40 (DE)

## Beschreibung

Bei der Erfindung wird gemäß dem Oberbegriff des Anspruches 1 von der DE-A 25 19 609 ausgegangen.

Die darin für eine Diesel-Brennkraftmaschine vorgeschlagene Vorrichtung zum gesteuerten Abbrennen von aus dem Abgas ausgefiltertem Ruß ist durch ihren Bauaufwand relativ teuer.

Aufgabe der Erfindung ist es deshalb, die bekannte Vorrichtung bei einer selbstzündenden, luftverdichtenden Einspritz-Brennkraftmaschine für mehrere Zwecke nutzbar zu machen und dadurch deren Kosten-Nutzen-Verhältnis zu erhöhen.

Ausgehend von dem im Oberbegriff des Anspruches 1 berücksichtigten Stand der Technik wird diese Aufgabe von der Erfindung mit den im Kennzeichen des Anspruches 1 aufgeführten Merkmalen gelöst.

Durch die erfindungsgemäße Mehrzwecknutzung der Rußabbrenn-Vorrichtung an einer Diesel-Brennkraftmaschine wird diese Vorrichtung rentabler.

So kann nach Anspruch 2 die Rußabbrenn-Vorrichtung bei einem Kaltstart der Diesel-Brennkraftmaschine als Flammstartanlage dienen. Diese erfindungsgemäße Nutzung wird mit geringem zusätzlichem Aufwand erreichbar, wenn für die Zuführung der in der Rußabbrenn-Vorrichtung erzeugten Heißgase in die Ansauganlage der Brennkraftmaschine eine vorhandene Abgasrückführleitung verwendet wird.

Weiter kann die Rußabbrenn-Vorrichtung bei nicht betriebener Diesel-Brennkraftmaschine erfindungsgemäß betrieben werden zur Erzeugung von Heißgas, das beispielsweise bei niedrigen Umgebungstemperaturen gemäß Anspruch 3 durch einen Wärmetauscher zum Vorwärmen eines Kühlmittels der Brennkraftmaschine oder des Schmieröles geführt ist.

Die vorbeschriebenen Ausgestaltungen zur erfindungsgemäßen Mehrzwecknutzung der Rußabbrenn-Vorrichtung können zugleich an einer Diesel-Brennkraftmaschine angeordnet sein. Hierfür ist eine gemeinsame Steuereinrichtung möglich, die beim Starten der Brennkraftmaschine die Bypass-Leitung zum Wärmetauscher absperrt und die Abgasrückführleitung zur Ansauganlage öffnet. Weiter ist die Rußabbrenn-Vorrichtung beim Betrieb der Diesel-Brennkraftmaschine über die Steuereinrichtung in bekannter Weise in Abhängigkeit vom Abgasgegendruck stromauf des Rußfilters angesteuert.

Die Erfindung ist anhand eines schematisch dargestellten Ausführungsbeispiels beschrieben.

Die Zeichnung zeigt in

Figur 1 eine Diesel-Brennkraftmaschine mit Rußfilter und Rußabbrenn-Vorrichtung mit für Normalbetrieb eingestellten Steuerorganen,

Figur 2 auf Flammstart-Betrieb eingestellten Steuerorganen,

Figur 3 auf Wärmetauscher-Betrieb eingestellten Steuerorganen,

Figur 4 auf Abbrenn-Betrieb eingestellten Steuerorganen,

Figur 5 auf Abgasrückführ-Betrieb eingestellten Steuerorganen.

Eine mit 1 bezeichnete Diesel-Brennkraftmaschine weist eine Ansauganlage 2 und eine Abgasanlage 3 auf. In der Abgasanlage 3 ist ein Rußfilter 4 angeordnet. Eine Rußabbrenn-Vorrichtung 5 umfaßt einen im Rußfilter 4 angeordneten Brenner 6 und eine Frischluftleitung 7. Diese steht einerseits mit der Ansauganlage 2 in Verbindung und mündet andererseits in das Rußfilter 4 nahe dem Brenner 6. Weiter ist an das Rußfilter 4 brennerseitig bzw. abgaszustromseitig eine Leitung 8 angeschlossen, die andernends in die Ansauganlage 2 mündet. In der Frischluftleitung 7 ist ein Steuerorgan 70 und in der Leitung 8 ein Steuerorgan 80 angeordnet. Weiter ist die Ansauganlage 2 zwischen der Frischluftleitung 7 und der Leitung 8 mit einem Steuerorgan 20 ausgerüstet.

Schließlich ist in einem nicht dargestellten Kreislauf eines flüssigen Betriebsstoffes — Kühlwasser oder Schmieröl — der Diesel-Brennkraftmaschine 1 ein Wärmetauscher 9 angeordnet. Der Wärmetauscher 9 steht nach dem Rußfilter 4 über eine Bypass-Leitung 10 mit der Abgasanlage 3 in Verbindung. Zwischen den Anschlüssen der Bypass-Leitung 10 an die Abgasanlage 3 ist diese mit einem Steuerorgan 30 ausgerüstet. In der Bypass-Leitung 10 ist ein Steuerorgan 100 angeordnet.

Die Rußabbrenn-Vorrichtung 5 ist zum Anwärmen von Arbeits- und Betriebsstoffen, wie Ansaugluft, Kühlwasser oder Schmieröl, für die Brennkraftmaschine 1 vor oder während deren Inbetriebnahme über eine nicht gezeigte Einrichtung ansteuerbar. Über diese Einrichtung sind auch alle vorstehend genannten Steuerorgane 20, 30, 70, 80 und 100 angesteuert.

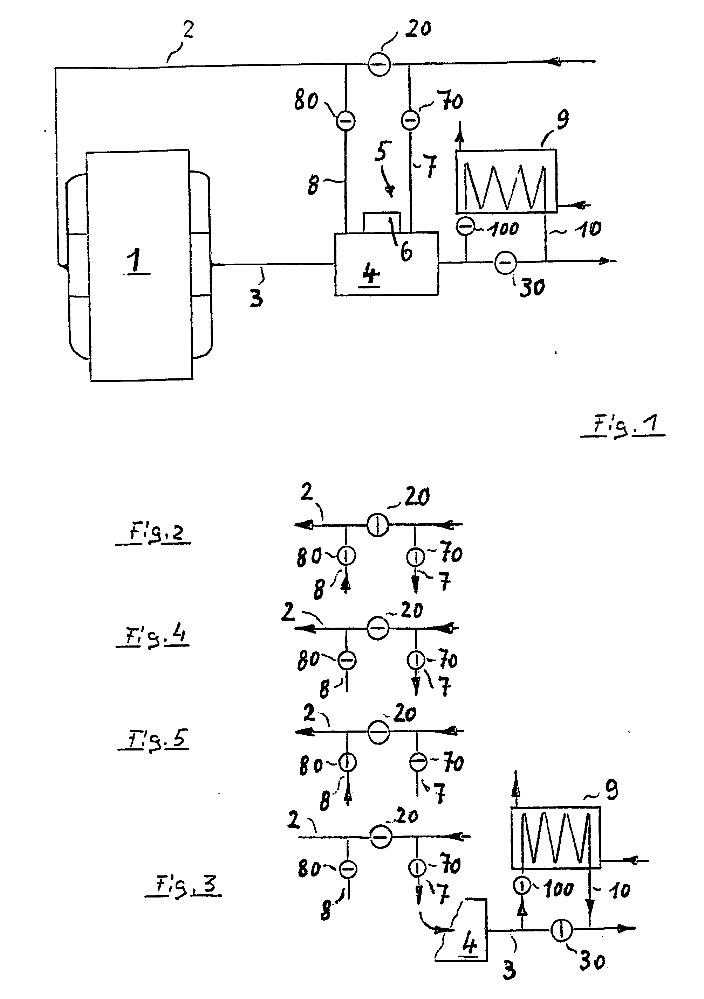

Bei Normalbetrieb der Diesel-Brennkraftmaschine 1 ohne Rußabbrennen im Rußfilter 4 ist gemäß Fig. 1 das Steuerorgan 20 in der Ansauganlage 2 und das Steuerorgan 30 in der Abgasanlage 3 auf freien Durchgang gesteuert. Die Steuerorgane 70, 80 und 100 sind auf Absperren gesteuert.

Zum Anwärmen der Ansaugluft beim Starten der Diesel-Brennkraftmaschine 1 wird die Rußabbrenn-Vorrichtung 5 zum Zünden des Brenners 6 angesteuert, wobei zugleich die Steuerorgane 70 und 80 gemäß Fig. 2 der Leitungen 7 und 8 zwischen Ansauganlage 2 und Rußfilter 4 auf freien Durchgang gesteuert werden. Das Steuerorgan 20 ist dabei auf Absperren gesteuert. Die Ansaugluft strömt somit über die Frischluftleitung 7 zur Flamme des Brenners 6 im Rußfilter 4. Das aus erwärmter Ansaugluft und den Abgasen des Brenners 6 bestehende Heißgas ist über die Leitung 8 der Ansauganlage 2 zugeführt. Die Rußabbrenn-Vorrichtung 5 dient somit als Flammstartanlage.

Zum Anwärmen des Kühlwassers oder des Schmieröles im Wärmetauscher 9 vor Inbetriebnahme der Diesel-Brennkraftmaschine 1 wird die Rußabbrenn-Vorrichtung 5 zum Zünden des Brenners 6 angesteuert, wobei zugleich das Steuerorgan 70 gemäß Fig. 3 in der Frischluftleitung 7 auf freien Durchgang und das Steuerorgan 80 in der Leitung 8 auf Absperren gesteuert ist. Ferner ist das Steuerorgan 30 in der Abgasanlage 3 auf Absperren gesteuert, während das Steuerorgan 100 in der Bypass-Leitung 10 zum Wärmetauscher 9 auf freien Durchgang eingestellt ist. Somit wird der Wärmetauscher 9 von den Heißgasen der angesteuerten Rußabbrenn-Vorrichtung 5 durchströmt.

Wird während des Betriebes der Diesel-Brennkraftmaschine 1 die Rußabbrenn-Vorrichtung 5 abhängig vom Abgasgegendruck zum Rußabbrennen angesteuert, ist gemäß Fig. 4 das Steuerorgan 70 der Frischluftleitung 7 auf freien Durchgang und das Steuerorgan 80 der Leitung 8 auf Absperren gesteuert.

Ist schließlich während des Betriebes der Diesel-Brennkraftmaschine 1 eine Abgasrückführung in die Ansauganlage 2 vorgesehen, wird gemäß Fig. 5 das Steuerorgan 80 der Leitung 8 auf freien Durchgang und das Steuerorgan 70 der Frischluftleitung 7 auf Absperren gesteuert.

**Ansprüche**

1. Selbstzündende, luftverdichtende Einspritz-Brennkraftmaschine,
   — mit einem Rußfilter (4) in der Abgasanlage und
   — einer steuerbaren Rußabbrenn-Vorrichtung (5),
   — die einen im Rußfilter angeordneten Brenner (6) umfaßt und mit dem Rußfilter gesondert zugeführter Frischluft betreibbar ist,
   dadurch gekennzeichnet,
   — daß die Rußabbrenn-Vorrichtung (5) zum Anwärmen der Brennkraftmaschine (1) und/oder von Arbeits- und Betriebsstoffen der Brennkraftmaschine (1) vor oder während des Betriebes der Brennkraftmaschine betreibbar ist.

2. Brennkraftmaschine nach Anspruch 1,
   — mit einer Abgasrückführleitung,
   — die in die Ansauganlage mündet,
   dadurch gekennzeichnet,
   — daß wenigstens ein Teil der Ansaugluft beim Starten der Brennkraftmaschine (1) über die Rußabbrenn-Vorrichtung (5) und die Abgasrückführleitung (8) geführt ist,
   — wobei die Rußabbrenn-Vorrichtung (5) als Flammstartanlage wirkt.

3. Brennkraftmaschine nach Anspruch 1 oder 2, mit
   — einem im Kreislauf eines flüssigen Betriebsstoffes angeordneten Wärmetauscher, der über
   — eine absperrbare Bypass-Leitung mit der Abgasanlage in Verbindung steht,
   dadurch gekennzeichnet,

— daß der Wärmetauscher (9) vor Inbetriebnahme der Brennkraftmaschine (1) von den Heißgasen der betriebenen Rußabbrenn-Vorrichtung (5) durchströmt ist.

**Claims**

1. A self-igniting, air-compressing injection combustion engine,
   — with a soot filter (4) in the exhaust system and
   — a controllable device (5) for burning soot
   — which comprises a burner (6) arranged in the soot filter and can be operated by means of fresh air supplied separately to the soot filter, characterized in
   — that the device (5) for burning soot can be operated for warming up the combustion engine (1) and/or the working medium and fuel of the combustion engine (1) prior to or during running of the combustion engine.

2. A combustion engine according to Claim 1,
   — with an exhaust gas return pipe,
   — which discharges into the suction system, characterized in
   — that at least a part of the suction air is passed through the device (5) for burning soot and through the exhaust gas return pipe (8) when the combustion engine (1) is started,
   — the device (5) for burning soot acting as a flame-starting system.

3. An internal combustion engine according to Claim 1 or 2, with
   — a heat-exchanger, which is arranged in the circulation path of a fluid fuel and which
   — communicates with the exhaust system by way of a bypass pipe which can be shut off, characterized in
   — that the hot gases from the driven device (5) for burning soot pass through the heat-exchanger (9) before the combustion engine (1) is set in operation.

**Revendications**

1. Moteur à combustion interne à injection avec allumage séparé et compression d'air,
   — avec un filtre à suie (4) dans l'installation des gaz d'échappement,
   — avec un dispositif (5) susceptible d'être commandé pour brûler la suie,
   — ce dispositif comprenant un brûleur (6) disposé dans le filtre à suie et étant susceptible d'être exploité avec de l'air frais amené séparément au filtre à suie,
   moteur caractérisé en ce que :
   — le dispositif (5) pour brûler la suie est susceptible d'être exploité pour réchauffer le moteur à combustion interne (1) et/ou des substances de travail et de fonctionnement du moteur à combustion interne (1) avant ou pendant le fonctionnement de ce moteur.

2. Moteur à combustion interne selon la revendication 1,

— avec une canalisation de recyclage des gaz d'échappement,

— qui débouche dans l'installation d'aspiration,

moteur caractérisé en ce que :

— au moins une partie de l'air aspiré lors du démarrage du moteur à combustion interne (1) est canalisée par l'intermédiaire du dispositif (5) pour brûler la suie et par l'intermédiaire de la canalisation (8) de recyclage des gaz d'échappement,

— le dispositif (5) pour brûler la suie jouant alors le rôle d'installation de démarrage de la flamme.

3. Moteur à combustion interne selon revendication 1 ou 2, avec,

— un échangeur thermique disposé dans le circuit d'une substance de service liquide

— qui est en communication avec l'installation de gaz d'échappement par l'intermédiaire d'une canalisation de dérivation susceptible d'être fermée,

moteur caractérisé en ce que :

— l'échangeur thermique (9) avant la mise en route du moteur à combustion interne (1) est parcouru par les gaz chauds du dispositif (5) pour brûler la suie.

Fig.1

Fig.2

Fig.4

Fig.5

Fig.3